# EUROPEAN PATENT SPECIFICATION

(11) **EP 2 241 667 B1**
(45) Date of publication and mention of the grant of the patent: **23.03.2016**
(21) Application number: 09005290.3
(22) Date of filing: 14.04.2009
(51) Int. Cl.: D06F 39/02, B29C 45/14, B29K 27/18

(54) **Household appliance detergent dispenser container, and method of producing the container**
Behälter zur Ausgabe eines Reinigers für eine Haushaltsanwendung sowie Verfahren zur Herstellung des Behälters
Conteneur de distributeur de détergent pour appareil domestique, et procédé de production du conteneur

(43) Date of publication of application: 20.10.2010
(60) Divisional application: 15191603.8
(73) Proprietor: Electrolux Home Products Corporation N.V., 1130 Brussels (BE)
(72) Inventor: Krupicka, Andreas, 33170 Pordenone (PN) (IT)
(74) Representative: Nardoni, Andrea

(56) References cited:
- EP-A- 2 009 170
- WO-A-2005/102652
- DE-A1- 2 514 000
- DE-A1- 4 316 940
- DE-A1- 10 122 514
- GB-A- 2 351 691
- US-A1- 2005 130 861

## Description

The present invention relates to a household appliance detergent dispenser container, and to a method of producing the container.

More specifically, the present invention relates to a detergent dispenser container, drawer-type or not, used in an household appliance such as a dishwasher or washing machine, to which the following description refers purely by way of example.

As is known, washing machines or dishwashers have a detergent dispenser container with one or more outwardly-open pockets inside, each defining a detergent compartment able to contain washing powder or additive, to be dispensed at various stages in the wash program.

As is also known, the detergent compartments of the dispenser container are made of plastic, typically polypropylene, which, having a low non-stick coefficient, is subject to detergent build-up on the outer surface of the compartment.

Detergent sticking to the outer surface of the dispenser container compartment is a serious problem, in that, on the one hand, it prevents thorough flushing of the container at the end of the wash cycle, and, on the other, promotes the growth of bacteria inside the container, to the obvious detriment of the user.

Accordingly, considerable research has been carried out over the past few years to determine suitable materials from which to produce detergent dispenser containers, and which reduce detergent adhesion to the inner surfaces of the compartments to eliminate the above drawbacks. A good deal of work, however, still remains to be done.
US2005/0130861 discloses a device for dispensing a laundry agent that may be made in PTFE.
DE 101 22 514 discloses a detergent container wherein an anti-stick surface is obtained by providing a roughened surface forming a microstructure.
EP 2 009 170 discloses a plastic article with an anti-stick layer formed by carbon-film made of thin-film amorphous carbon which is deposited onto the plastic surface through a Plasma assisted CVD.
WO2005/102652 discloses a method for producing a polymer product requiring to provide a PTFE body on which a bonding surface is prepared so as to allow a polymer to be moulded thereon. Such method requires to prepare a bonding surface on an already formed PTFE body.
DE 43 16 940 refers to a mangle arranged to avoid fixing of creases on laundry and chemical deposits on the mangle
GB 2 351 691 discloses a method of moulding a composite article having an adhesion preventing surface layer. Such method, however, requires fixing PTFE to plastics through a compatibiliser compound when forming an article under conditions of heat and pressure.
DE 25 14 000 deals with a plastic product with PTFE surface.

It is an object of the present invention to provide an electric household appliance detergent dispenser container with detergent compartments able to reduce detergent adhesion inside.

It is also an object of the present invention to provide a low-cost method of producing an household appliance detergent dispenser container with detergent compartments able to reduce detergent adhesion inside.

According to the present invention, there is provided an household appliance detergent dispenser container as claimed in Claim 1 and preferably, though not necessarily, in any one of the Claims depending directly or indirectly on Claim 1.

According to the present invention, there is also provided an electric household appliance as claimed in Claim 4 and preferably, though not necessarily, in any one of the Claims depending directly or indirectly on Claim 4.

According to the present invention, there is also provided a method of producing an household appliance detergent dispenser container, as claimed in Claim 6 and preferably, though not necessarily, in any one of the Claims depending directly or indirectly on Claim 6.

A non-limiting embodiment of the present invention will be described by way of example with reference to the accompanying drawings, in which:
Figure 1 shows a schematic front view of an electric household appliance featuring a detergent dispenser container in accordance with the teachings of the present invention;
Figure 2 shows a partly sectioned, schematic view of the Figure 1 container;
Figure 3 shows a variation of the container according to the present invention;
Figures 4 to 10 show, schematically, respective steps in the method of producing a container in accordance with the teachings of the present invention; while
Figures 11 to 13 show, schematically, respective steps of a different embodiment in the method of producing a container in accordance with the teachings of the present invention.

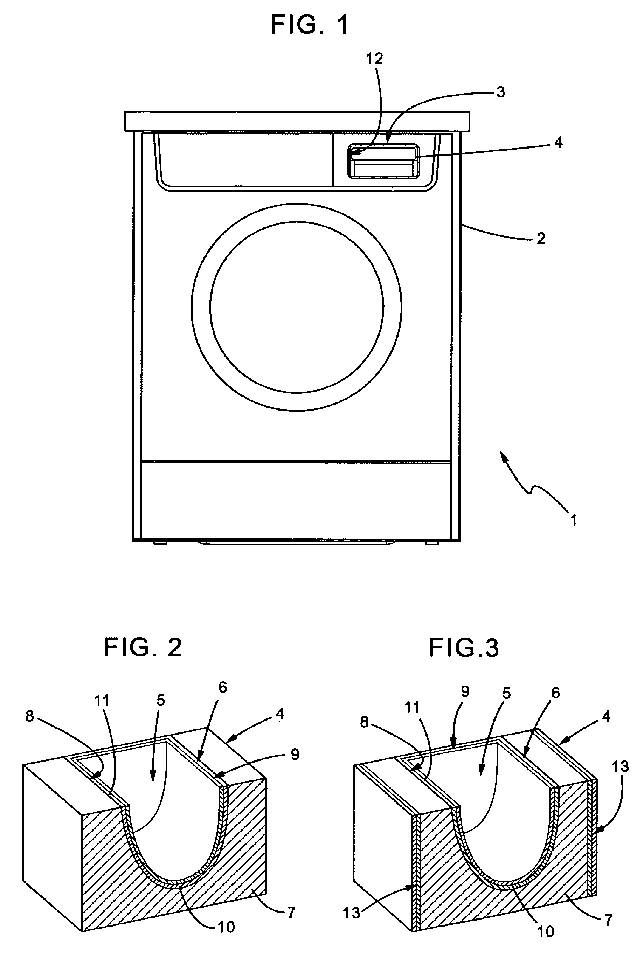

Number 1 in Figure 1 indicates as a whole an household appliance, such as a dishwasher or washing machine, substantially comprising a casing 2; a wash assembly (not shown) housed inside casing 2; and a detergent dispenser 3 for housing and dispensing detergents, such as washing powder and/or softener or similar wash products, and which is designed to contain and feed the detergents, on command, to the wash assembly (not shown).

Being known and not the object of the present invention, the wash assembly is not described in detail.

Dispenser 3 substantially comprises a dispenser container 4 having one or more detergent compartments 5, each of which is able to contain one or more detergents and is designed with an outer surface layer 6 of non-stick material.

More specifically, in the Figure 2 example, container 4 comprises a substantially parallelepiped-shaped support 7 made of plastic material, and in which an open-topped pocket 8 for the detergent is formed.

In the example shown, support 7 is made of polymeric material, such as a thermoplastic polymer. In detail the thermoplastic polymer could be, for example, PP (polypropylene), or ABS (Acrylonitrile butadiene styrene) or PC (polycarbonate) or any similar thermoplastic polymer.

In the Figure 2 the outer surface layer 6 of the container 4 comprises a sheet 9 in turn comprising an outer surface of non-stick material in the form of polytetrafluoroethylene (PTFE).

More specifically, sheet 9 substantially comprises adhesion promoting layer 10 having a first face fixed firmly to support 7; and a polytetrafluoroethylene (PTFE) film 11 having a first face fixed firmly to the second face of the adhesion promoting layer 10, and a second face defining the non-stick outer surface of compartment 5 eventually contacting the detergent.

With regard to the adhesion promoting layer 10, it may comprise, for example, a bonding agent disclosed in the International Patent No. WO2005/102652, filed on April 21, 2005 in the name of Chemplast Marc Etter LIMITED.

In one possible embodiment shown partly in Figure 3, container 4 is a drawer-type container designed to fit inside a seat 12 formed in casing 2, so as to slide, inside seat 12, between a rest position, in which container 4 is inserted completely inside seat 12, and a loading position, in which container 4 projects outwards from casing 2 and seat 12 to load the detergent inside compartment 5.

More specifically, container 4 has outer surfaces 13 which slide inside seat 12, and which advantageously comprise outer surface layer 6 of polytetrafluoroethylene (PTFE).

Outer surface layer 6 of polytetrafluoroethylene on surfaces 13 of container 4 has the advantage of reducing friction of container 4 as it slides inside seat 12.

In detail, each outer surface 13 of the container 4 comprises a sheet 9 comprising the adhesion promoting layer 10 having a first face fixed firmly to outer surface of the support 7; and the polytetrafluoroethylene (PTFE) film 11 having a first face fixed firmly to the second face of the adhesion promoting layer 10, and a second face defining the sliding surface of the container 4.

In an embodiment not shown, container 4 may have no of polytetrafluoroethylene surface layer 6 in compartment 5, and may only comprise the polytetrafluoroethylene layer 6 on outer slide surfaces 13.

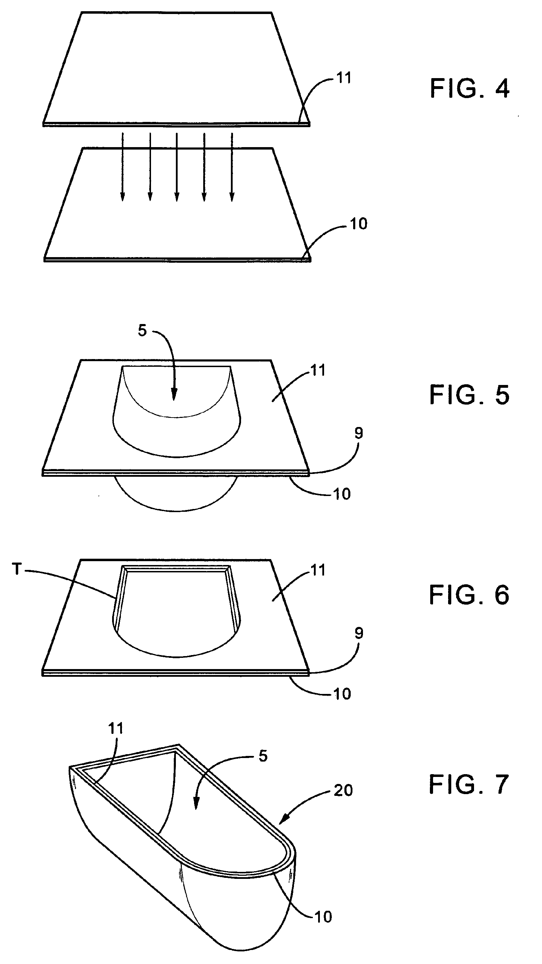

The method of producing container 4 will now be described with reference to Figures 4-10.

The method is substantially based on the principle of making detergent compartment 5 of the container 4 with the outer surface layer 6 of polytetrafluoroethylene material to reduce detergent adhesion to the outer surface of compartment 5.

The method substantially comprises a first step of forming a preform 20 of compartment 5 comprising outer surface layer 6 of polytetrafluoroethylene; a second step of placing preform 20 inside the cavity 21 of an injection mold 22; and a third step of injecting molten thermoplastic polymer into cavity 21 to fix preform 20 firmly to the molten polymer material and so form one body defining container 4.

More specifically, the first step comprises: preparing the polytetrafluoroethylene (PTFE) film 11 and fixing the adhesion promoting layer 10 to the polytetrafluoroethylene (PTFE) film 11 to form sheet 9 (as shown schematically in Figure 4).

The first step also comprises pre-forming sheet 9 to form a seat defining detergent compartment 5 of container 4 (as shown schematically in Figure 5)

At this point, the first step may comprise the step of cutting the preformed sheet 9 along a cutting line T defining the top outer peripheral edge of compartment 5 (Figure 6), to obtain the preform 20 of compartment 5 of container 4 (as shown schematically in Figure 7).

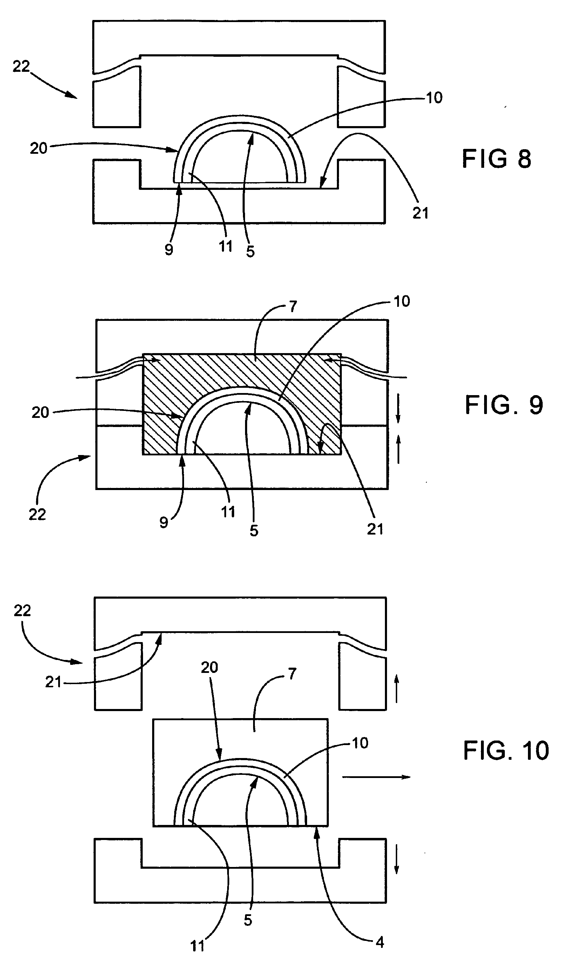

The preform 20 is then placed inside cavity 21 of injection mold 22, so that the outer surface of compartment 5 faces the inner face of cavity 21 (as shown schematically in Figure 8).

At this point, injection mold 22 is closed, and molten polymer is injected into cavity 21 to form a portion support 7 inside cavity 21 (as shown schematically in Figure 9). More specifically, as it is injected, the molten polymer gradually contacts the first face of adhesion promoting layer 10 of preform 20, and an interfacial bond is generated, thus fixing preform 20 to support 7.

After a predetermined time to allow the polymer to solidify, the injection mold is opened to extract container 4 (as shown schematically in Figure 10).

In a different embodiment, the method may comprise the step of pre-forming sheet 9 to obtain outer slide surfaces 13 of drawer-type container 4. More specifically, the method may comprise, for example, preparing a number of separate sheets 9 of non-stick material for corresponding outer slide surfaces 13 of container 4; performing each sheet 9 to the shape of the relative outer slide surface 13 of container 4; placing each preform 20 inside cavity 21 of injection mold 22, in a position corresponding to the outer slide surface 13 of container 4; and, finally, injecting the molten polymer into cavity 21 to form and at the same time join support 7 to preforms 20.

Making the outer surface of the container compartment out of polytetrafluoroethylene (PTFE) has the major advantage of greatly reducing detergent adhesion to the outer surface of the compartment, thus enabling more thorough flushing of the container at the end of the wash cycle, and also reducing the formation of bacteria inside the container.

Moreover, the method described above of producing the container is extremely easy, and therefore cheap, to implement.

It should be pointed out that the adhesion promoting layer between the polytetrafluoroethylene (PTFE) film and the polypropylene support is advantageous to the method described, on account of the chemical incompatibility of polytetrafluoroethylene and polypropylene and the impossibility, demonstrated by laboratory tests, of firmly joining polytetrafluoroethylene (PTFE) directly to a polypropylene surface.

Clearly, changes may be made to the container and method as described herein without, however, departing from the scope of the present invention as defined in the accompanying Claims.

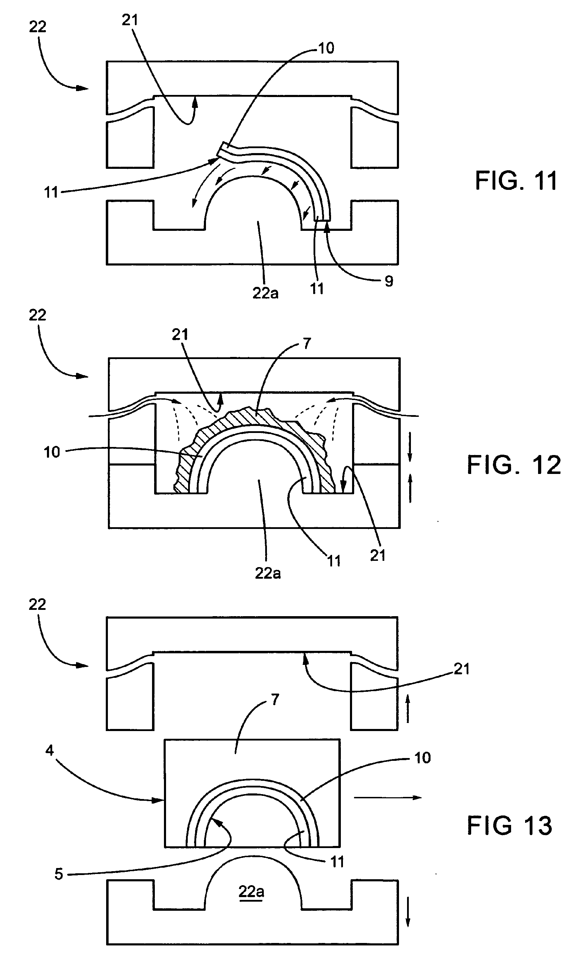

According to an additional embodiment shown in figures 11, 12 and 13, the injection mold 22 comprises a inner portion 22a which is shaped so that negatively reproduce the inner seat which define the detergent compartment 5 of the container 4.
In detail, with reference to the embodiment shown in figures 11, 12 and 13, the step of pre-forming sheet 9 to form a seat defining compartment 5 of container 4 is substituted by the step of placing one or more sheets 9 inside the cavity 21 of injection mold 22 upon the inner portion 22a and preferably, though not necessarily fixing the sheets 9 with the surface of the inner portion 22a of the injection mold 22 (Figures 11 and 12). It should be pointed out that the sheet 9 being supported from the inner portion 22a take the negative form of the inner portion 22a itself.

At this point, injection mold 22 is closed, and molten polymer is injected into cavity 21 to form support 7 inside cavity 21 (as shown schematically in Figure 12). More specifically, as it is injected, the molten polymer gradually contacts the first face of adhesion promoting layer 10 of the sheets 9, and an interfacial bond is generated, thus fixing sheets 9 to support 7.

## Claims

1. A household appliance detergent dispenser container (4) comprising at least one detergent compartment (5); said container (4) being **characterized in that** said detergent compartment (5) comprises a detergent surface layer (6) of polytetrafluoroethylene (PTFE) defining the outer surface of the detergent compartment (5) for contacting the detergent, wherein said detergent surface layer comprises at least a polytetrafluoroethylene (PTFE) film (11) and an adhesion promoting layer (10) which is fixed firmly to said polytetrafluoroethylene (PTFE) film (11).

2. A detergent dispenser container as claimed in Claim 1, comprising a support portion (7) made of plastic material; said detergent surface layer (6) of said compartment (5) being fixed firmly to said support portion (7).

3. A detergent dispenser container as claimed in Claim 2, wherein said support portion (7) is fixed firmly to the adhesion promoting layer (10) of said detergent surface layer (6).

4. An electric household appliance (1) comprising a detergent dispenser container (4) as claimed in any one of the foregoing Claims.

5. An electric household appliance (1) according to claim 4 wherein the household appliance (1) comprises a seat (12); said container (4) being a drawer-type container (4) and comprising outer slide surfaces (13) by which the drawer-type container (4) slides inside said seat (12); said outer slide surfaces (13) of said container (4) comprising said outer surface layer (6) of polytetrafluoroethylene (PTFE).

6. A method of producing a household appliance detergent dispenser container (4) which comprises at least one detergent compartment (5);
said method being **characterized by** comprising the steps of:
a) fixing (11) an adhesion promoting layer (10) to a polytetrafluoroethylene (PTFE) film to form a sheet (9);
b) placing said sheet (9) inside the cavity (21) of an injection mold (22); said sheet (9) reproducing the shape of said compartment (5);
c) injecting molten plastic material into said cavity (21) of said injection mold (22) so that to gradually contact the surface of said adhesion promoting layer (10) of the sheet (9); said injected molten plastic material into said cavity (21) reproducing a portion support (7) of said container (4).

7. A method as claimed in Claim 6, wherein before said step b), the method comprises the step d) of performing said sheet (9) to obtain a preform (20) reproducing the shape of said compartment (5) and having the polytetrafluoroethylene (PTFE) film (11) on its outer detergent surface.

8. A method as claimed in Claim 7, comprising the step of cutting said preform (20) along a cutting line (T) defining the outer peripheral edge of said compartment (5).

9. A method as claimed in Claim 6, wherein said injection mold (22) comprises a inner portion (22a), which is shaped so that to negatively reproduce the inner seat which define compartment (5) of the container (4); said step b) comprising the step of fixing at lest a said sheet (9) with the surface of the inner portion (22a) of the injection mold (22) to reproduce the shape of said compartment (5).

10. A method as claimed in any one of the foregoing Claims, wherein said container (4) is a drawer-type container comprising outer slide surfaces (13) by which the drawer-type container (4) slides inside a household appliance seat (12); before to said phase c), said method comprising the step of placing at least one of said sheets (9) inside the cavity (21) of said injection mold (22) so that to reproduce at least one outer slide surfaces (13) of said drawer-type container (4).

11. A method as claimed in any one of the foregoing Claims, wherein said step c) comprises the step of injecting molten thermoplastic polymer into said cavity (21) to fill the space inside said cavity (21) so that to contact with said adhesion promoting layer (10) of said sheet (9).

## Patentansprüche

1. Haushaltsgeräte-Reinigungsmittelausgabebehälter (4), umfassend wenigstens eine Reinigungsmittelkammer (5); wobei der Behälter (4) **dadurch gekennzeichnet ist, dass** die Reinigungsmittelkammer (5) eine Reinigungsmitteloberflächenschicht (6) aus Polytetrafluorethylen (PTFE) umfasst, die die Außenoberfläche der Reinigungsmittelkammer (5) zum Kontakt mit dem Reinigungsmittel definiert, wobei die Reinigungsmitteloberflächenschicht wenigstens einen Polytetrafluorethylen(PTFE)-Film (11) und eine haftfördernde Schicht (10), die fest an den Polytetrafluorethylen(PTFE)-Film (11) gebunden ist, umfasst.

2. Reinigungsmittelausgabebehälter gemäß Anspruch 1, umfassend einen Trägerteil (7) aus Kunststoffmaterial; wobei die Reinigungsmitteloberflächenschicht (6) der Kammer (5) fest an den Trägerteil (7) gebunden ist.

3. Reinigungsmittelausgabebehälter gemäß Anspruch 2, wobei der Trägerteil (7) fest an die haftfördernde Schicht (10) der Reinigungsmitteloberflächenschicht (6) gebunden ist.

4. Elektrisches Haushaltsgerät (1), umfassend einen Reinigungsmittelausgabebehälter (4) gemäß einem der vorstehenden Ansprüche.

5. Elektrisches Haushaltsgerät (1) gemäß Anspruch 4, wobei das Haushaltsgerät (1) eine Aufnahme (12) umfasst; wobei der Behälter (4) ein Behälter vom Schubladentyp (4) ist und äußere Gleitflächen (13) umfasst, womit der Behälter vom Schubladentyp (4) in der Aufnahme (12) gleitet; wobei die äußeren Gleitflächen (13) des Behälters (4) die äußere Oberflächenschicht (6) aus Polytetrafluorethylen (PTFE) umfasst.

6. Verfahren zum Herstellen eines Haushaltsgeräte-Reinigungsmittelausgabebehälters (4), der wenigstens eine Reinigungsmittelkammer (5) umfasst;
wobei das Verfahren **dadurch gekennzeichnet ist, dass** es die Schritte umfasst:
a) Befestigen (11) einer haftfördernden Schicht (10) an einem Polytetrafluorethylen(PTFE)-Film, um ein Blatt (9) zu bilden;
b) Anordnen des Blatts (9) im Inneren des Hohlraums (21) einer Spritzgussform (22); wobei das Blatt (9) die Form der Kammer (5) nachbildet;
c) Einspritzen von geschmolzenem Kunststoffmaterial in den Hohlraum (21) der Spritzgussform (22), um allmählich mit der Oberfläche der haftfördernden Schicht (10) des Blatts (9) in Kontakt zu kommen; wobei das in den Hohlraum (21) eingespritzte geschmolzene Kunststoffmaterial einen Trägerteil (7) des Behälters (4) nachbildet.

7. Verfahren gemäß Anspruch 6, wobei das Verfahren vor dem Schritt b) den Schritt d) des Verwendens des Blatts (9) zum Herstellen einer Vorform (20), die die Form der Kammer (5) nachbildet und den Polytetrafluorethylen(PTFE)-Film (11) auf ihrer Reinigungsmittel-Außenoberfläche aufweist, umfasst.

8. Verfahren gemäß Anspruch 7, umfassend den Schritt, die Vorform (20) entlang einer Schnittlinie (T), die die Außenkante der Kammer (5) definiert, zu schneiden.

9. Verfahren gemäß Anspruch 6, wobei die Spritzgussform (22) einen inneren Teil (22a) umfasst, der so geformt ist, dass er die innere Aufnahme, die die Kammer (5) des Behälters (4) definiert, negativ nachbildet; wobei Schritt b) den Schritt des Anbringens wenigstens des Blatts (9) an der Oberfläche des inneren Teils (22a) der Spritzgussform (22), um die Form der Kammer (5) nachzubilden, umfasst.

10. Verfahren gemäß einem der vorstehenden Ansprüche, wobei der Behälter (4) ein Behälter vom Schubladentyp ist, der äußere Gleitflächen (13) umfasst, womit der Behälter vom Schubladentyp (4) innerhalb einer Aufnahme (12) eines Haushaltsgeräts gleitet; wobei das Verfahren vor der Phase c) den Schritt des Anordnens wenigstens eines der Blätter (9) im Inneren des Hohlraums (21) der Spritzgussform (22) umfasst, um wenigstens eine äußere Gleitfläche (13) des Behälters vom Schubladentyp (4) nachzubilden.

11. Verfahren gemäß einem der vorstehenden Ansprüche, wobei Schritt c) den Schritt des Einspritzens von geschmolzenem thermoplastischem Polymer in den Hohlraum (21) umfasst, um den Raum innerhalb des Hohlraums (21) zu füllen, so dass Kontakt mit der haftfördernden Schicht (10) des Blatts (9) entsteht.

## Revendications

1. Réceptacle (4) de distributeur de détergent pour appareil ménager comprenant au moins un compartiment à détergent (5) ; ledit réceptacle (4) étant **caractérisé en ce que** ledit compartiment à détergent (5) comprend une couche superficielle à détergent (6) en polytétrafluoroéthylène (PTFE) définissant la surface extérieure du compartiment à détergent (5) destinée à venir en contact avec le détergent, dans lequel ladite couche superficielle à détergent comprend au moins un film en polytétrafluoroéthylène (PTFE) (11) et une couche favorisant l'adhésion (10) qui est fixée solidement audit film en polytétrafluoroéthylène (PTFE) (11).

2. Réceptacle de distributeur de détergent selon la revendication 1, comprenant une partie de support (7) constituée d'une matière plastique ; ladite couche superficielle à détergent (6) dudit compartiment (5) étant fixée solidement à ladite partie de support (7).

3. Réceptacle de distributeur de détergent selon la revendication 2, dans lequel ladite partie de support (7) est fixée solidement à la couche favorisant l'adhésion (10) de ladite couche superficielle à détergent (6).

4. Appareil ménager électrique (1) comprenant un réceptacle (4) de distributeur de détergent selon l'une quelconque des revendications précédentes.

5. Appareil ménager électrique (1) selon la revendication 4, l'appareil ménager (1) comprenant un siège (12) ; ledit réceptacle (4) étant un réceptacle (4) de type tiroir et comprenant des surfaces de glissement extérieures (13) au moyen desquelles le réceptacle (4) de type tiroir glisse à l'intérieur dudit siège (12) ; lesdites surfaces de glissement extérieures (13) dudit réceptacle (4) comprenant ladite couche superficielle extérieure (6) en polytétrafluoroéthylène (PTFE).

6. Procédé de production d'un réceptacle (4) de distributeur de détergent pour appareil ménager qui comprend au moins un compartiment à détergent (5) ;
ledit procédé étant **caractérisé en ce qu'**il comprend les étapes suivantes :
a) fixer (11) une couche favorisant l'adhésion (10) à un film en polytétrafluoroéthylène (PTFE) afin de former une feuille (9) ;
b) placer ladite feuille (9) à l'intérieur de la cavité (21) d'un moule à injection (22) ; ladite feuille (9) reproduisant la forme dudit compartiment (5) ;
c) injecter une matière plastique fondue dans ladite cavité (21) dudit moule à injection (22) de façon à ce qu'elle vienne en contact de façon graduelle avec la surface de ladite couche favorisant l'adhésion (10) de la feuille (9) ; ladite matière plastique fondue injectée dans ladite cavité (21) reproduisant une partie de support (7) dudit réceptacle (4).

7. Procédé selon la revendication 6, comprenant, avant ladite étape b), l'étape d) consistant à préformer ladite feuille (9) afin d'obtenir une préforme (20) reproduisant la forme dudit compartiment (5) et comportant le film en polytétrafluoroéthylène (PTFE) (11) sur sa surface à détergent extérieure.

8. Procédé selon la revendication 7, comprenant l'étape consistant à découper ladite préforme (20) le long d'une ligne de coupe (T) définissant le bord périphérique extérieur dudit compartiment (5).

9. Procédé selon la revendication 6, dans lequel ledit moule à injection (22) comprend une partie intérieure (22a), qui est formée de façon à reproduire de façon inverse le siège intérieur qui définit le compartiment (5) du réceptacle (4) ; ladite étape b) comprenant l'étape consistant à fixer au moins une dite feuille (9) à la surface de la partie intérieure (22a) du moule à injection (22) afin de reproduire la forme dudit compartiment (5).

10. Procédé selon l'une quelconque des revendications précédentes, dans lequel ledit réceptacle (4) est un réceptacle de type tiroir comprenant des surfaces de glissement extérieures (13) au moyen desquelles le réceptacle (4) de type tiroir glisse à l'intérieur d'un siège (12) d'appareil ménager ; ledit procédé comprenant, avant ladite étape c), l'étape consistant à placer au moins une desdites feuilles (9) à l'intérieur de la cavité (21) dudit moule à injection (22) de façon à reproduire au moins une des surface de glissement extérieure (13) dudit réceptacle (4) de type tiroir.

11. Procédé selon l'une quelconque des revendications précédentes, dans lequel ladite étape c) comprend l'étape consistant à injecter un polymère thermoplastique fondu dans ladite cavité (21) afin de remplir l'espace à l'intérieur de ladite cavité (21) de façon à ce qu'il vienne en contact avec ladite couche favorisant l'adhésion (10) de ladite feuille (9).
